# FASCICULE DE BREVET EUROPEEN

(11) **EP 2 726 345 B1**
(45) Date de publication et mention de la délivrance du brevet: **02.11.2016**
(21) Numéro de dépôt: 12731116.5
(22) Date de dépôt: 05.06.2012
(51) Int. Cl.: B60S 5/06, B60S 13/00, B60L 11/18

(54) **POSITIONNEMENT D'UN VÉHICULE AUTOMOBILE, ET ÉCHANGE DE BATTERIE D'ALIMENTATION DU VÉHICULE**
POSITIONIERUNG EINES KRAFTFAHRZEUGS UND AUSTAUSCH EINER STROMVERSORGUNGSBATTERIE BEI EINEM FAHRZEUG
POSITIONING OF A MOTOR VEHICLE AND VEHICLE POWER SUPPLY BATTERY EXCHANGE

(30) Priorité: 01.07.2011 FR 1155925
(43) Date de publication de la demande: 07.05.2014
(73) Titulaire: Renault S.A.S., 92100 Boulogne-Billancourt (FR)
(72) Inventeur: BACHIR, Alain, F-78640 Saint Germain De La Grange (FR); JARDEL, Florent, F-75018 Paris (FR)
(86) Numéro de dépôt international: PCT/FR2012/051254
(87) Numéro de publication internationale: WO 2013/004931

(56) Documents cités:
- WO-A1-2010/139367
- WO-A1-2011/024883
- DE-A1- 10 248 397
- DE-A1- 19 743 515
- DE-A1-102009 023 409
- FR-A- 1 144 399
- GB-A- 2 241 212
- US-A1- 2011 044 791

## Description

### Domaine technique de l'invention

L'invention concerne un procédé et un dispositif de positionnement d'un véhicule automobile par rapport à un référentiel fixe, ainsi qu'un procédé et un système d'échange d'une batterie d'alimentation d'un moteur d'entraînement d'un véhicule automobile à traction électrique ou hybride.

### État de la technique

Certains véhicules automobiles, comme les véhicules électriques ou hybrides, comprennent un conteneur d'énergie d'alimentation d'un moteur électrique d'entraînement de type batterie électrique d'alimentation. Dans la suite de la description, le terme « batterie » sera utilisé pour une raison de simplification, comme désignant au sens large tout conteneur d'alimentation électrique d'un moteur électrique d'entraînement d'un véhicule. Il peut se révéler intéressant d'échanger cette batterie lorsque son niveau d'énergie est faible contre une nouvelle batterie chargée. Ceci peut être fait dans une station d'échange, comme par exemple une station similaire à une station-service pour le remplissage des réservoirs associés aux moteurs thermiques.

Dans de telles stations d'échange notamment, il se pose le problème essentiel de la mise en position du véhicule pour que l'échange de batterie puisse s'appliquer. Il est en effet nécessaire de parvenir à un positionnement précis du véhicule, mais pour rendre possible un développement aisé des solutions d'échange de batteries, il est nécessaire de rendre fiable, simple et robuste, le fonctionnement des solutions d'échange, en particulier des dispositifs de positionnement de véhicules, tout en limitant leur coût.

Une difficulté pour la mise en place d'un tel concept de positionnement de véhicule réside dans le fait qu'il peut exister une multitude de véhicules automobiles pouvant présenter des dimensions différentes, des empattements et des voies avant et arrière variables. Il est donc nécessaire de fournir une solution de positionnement de véhicule qui soit en outre flexible et universelle pour pouvoir s'adapter simplement à ces paramètres variables.

On connaît du document US2010/145717 une station d'échange de batteries électriques d'alimentation d'un moteur électrique d'entraînement d'un véhicule électrique et un procédé pour réaliser un tel échange. La station d'échange décrite comprend un moyen de montage et de démontage d'une batterie sur un véhicule. Le positionnement du véhicule est réalisé grossièrement par le conducteur puis des moyens de détection de la position du véhicule permettent ensuite au moyen de montage/démontage de se positionner relativement au véhicule. Il n'existe donc pas en soi de gestion du positionnement du véhicule ce qui oblige le moyen de montage/démontage à une grande complexité pour compenser les écarts de positionnement des véhicules à chaque nouvel échange, étant en outre peu fiable et onéreux.

Le document US2008/0294283 décrit une solution d'échange de batterie d'alimentation d'un moteur d'entraînement d'un véhicule automobile utilisant un positionnement du véhicule dans la station par l'intermédiaire de moyens optiques assurant une détection continue de la position longitudinale et transversale du véhicule. L'unité centrale recevant ces informations assure à distance un pilotage automatique du véhicule sans action du conducteur afin de venir positionner le véhicule à un emplacement donné de la station. Il est bien évident que cette solution est complexe, onéreuse, le grand nombre de capteurs et de moyens électroniques nécessaires au fonctionnement d'une telle station la rendant difficilement fiable et impliquant que son fonctionnement soit peu robuste. D'autre part, cette solution n'est réservée qu'aux véhicules autorisant un pilotage à distance, ce qui restreint considérablement les applications.

Le document FR20090054582 décrit une solution de positionnement d'un véhicule dans laquelle seul un positionnement longitudinal du véhicule est assuré par rapport à un référentiel fixe, mais pas de positionnement transversal. En effet, au contraire, le véhicule reste continuellement dans une même position transversale durant l'échange de batterie tandis que des moyens de palpage viennent en appui contre les faces latérales du véhicule, par exemple en appui contre les deux faces latérales des roues de l'essieu arrière du véhicule. Grâce aux données fournies par les moyens de palpage, c'est le dispositif de montage et de démontage de batteries qui peut être positionné par rapport au véhicule. Une telle solution apporte donc ces contraintes au sujet de la conception du dispositif de montage/démontage.

Le document US2011/0044791 décrit quant à lui une solution d'échange de batteries mettant en oeuvre un positionnement longitudinal du véhicule par rapport au sol puis un positionnement transversal dans lequel tout le véhicule est déplacé transversalement jusqu'à une mise en contact du flanc intérieur du pneu gauche d'au moins l'un des essieux contre une butée transversale fixe au sol. Dans cette solution, la position du plan médian longitudinal-vertical du véhicule occupe donc une position variable dans la direction transversale en fonction des voies avant et arrière du véhicule. Il résulte une fois encore de telles variations de positions du véhicule dans la direction transversale en fonction du type de véhicule, une complexité de gestion et de conception du dispositif de montage et de démontage de batterie sur le véhicule ou de tout autre dispositif destiné à interagir avec le véhicule, afin de compenser les écarts de position. La solution de positionnement de véhicule n'est donc pas flexible et universelle suivant le type de véhicule, et rend onéreuse et peu fiable la solution d'échange de batterie en raison des contraintes liées au dispositif de montage/démontage de batterie.

Le document GB 2 241 212 A décrit un procédé de positionnement selon le préambule de la revendication 1.

### Objet de l'invention

Le but de la présente invention est de remédier à ces inconvénients, en proposant une solution de positionnement d'un véhicule automobile par rapport à un référentiel fixe qui soit flexible et universelle, et qui permette de faciliter les opérations annexes pour lesquelles le positionnement du véhicule est nécessaire.

Un premier aspect de l'invention concerne un procédé de positionnement par rapport à un référentiel fixe comprenant un axe longitudinal de référence, un axe transversal de référence et un axe vertical de référence, d'un véhicule automobile comprenant un axe longitudinal, un axe transversal et un axe vertical, en l'absence d'action d'un moteur d'entraînement du véhicule automobile. Le procédé comprend une première étape de centrage transversal du véhicule par rapport à un plan longitudinal-vertical de référence invariable dans le référentiel fixe jusqu'à faire coïncider ou sensiblement coïncider le centre d'un premier essieu du véhicule, de préférence l'essieu arrière mais possiblement l'essieu avant, avec le plan de référence quelles que soient la voie du premier essieu du véhicule, le procédé comportant une deuxième étape de positionnement du véhicule par rapport au référentiel fixe, comprenant :
- un positionnement du véhicule par rapport au référentiel fixe selon l'axe longitudinal de référence, et/ou
- un positionnement du véhicule par rapport au référentiel fixe autour de l'axe vertical de référence de sorte à faire coïncider un plan médian longitudinal-vertical du véhicule avec le plan longitudinal-vertical de référence, ladite deuxième étape de positionnement comprenant le placement des deux roues du premier essieu du véhicule dans un élément de positionnement longitudinal, par abaissement d'un élément de support sur lesquels ces roues reposent au cours de la première étape de centrage.

La première étape de centrage peut comprendre un aménagement d'une mobilité libre du véhicule selon l'axe transversal de référence par rapport au référentiel fixe et une application d'efforts sur le véhicule configurés de sorte à déplacer le véhicule. L'application d'efforts peut être réalisée sur deux éléments symétriques du véhicule relativement à un plan médian longitudinal-vertical associé au véhicule, notamment deux roues du premier essieu, par deux éléments de centrage contraints à se déplacer symétriquement l'un à l'autre relativement au plan de référence.

Le procédé de positionnement peut en outre comprendre une étape d'immobilisation du véhicule par rapport au référentiel fixe, qui peut être combinée à la deuxième étape de positionnement. Dans ce dernier cas, la deuxième étape de positionnement et l'étape d'immobilisation peuvent comprendre la mise en place d'un glissement relatif libre selon l'axe longitudinal de référence, par rapport au sol qui est fixe dans le référentiel fixe, des roues qui ne coopèrent pas avec l'élément de positionnement longitudinal.

Le procédé de positionnement peut comprendre également une étape de correction d'assiette du véhicule par rapport au sol fixe dans le référentiel fixe, comprenant :
- un positionnement de la caisse du véhicule par rapport au sol selon l'axe vertical de référence, et/ou
- un positionnement de la caisse du véhicule par rapport au sol autour de l'axe longitudinal, et/ou
- un positionnement de la caisse du véhicule par rapport au sol autour de l'axe transversal.

Un deuxième aspect de l'invention concerne un procédé d'échange d'une batterie d'alimentation d'un moteur d'entraînement d'un véhicule automobile à traction électrique ou hybride, comprenant une étape de positionnement du véhicule par rapport à un système d'échange de batterie, ce positionnement étant réalisé en mettant en oeuvre un procédé de positionnement tel que mentionné ci-dessus.

Ce procédé d'échange peut comprendre une étape de pré-positionnement du véhicule par le conducteur par rapport au système d'échange, préalablement à l'étape de positionnement, et comprenant un guidage actif du conducteur au niveau d'une interface conducteur/système d'échange. L'étape de pré-positionnement peut comprendre une détermination de la position réelle du véhicule par rapport au référentiel fixe, au moins selon les axes transversal de référence et longitudinal de référence.

La mise en place du glissement relatif libre des roues selon l'axe longitudinal de référence par rapport au sol peut être commandée lors de l'ouverture d'une trappe ménagée sous le véhicule au droit de la batterie pour en permettre le montage et le démontage relativement au véhicule.

De plus, le procédé d'échange peut comprendre un aménagement amovible d'éléments de remplissage entre la caisse du véhicule et le sol en périphérie du trou que la trappe est destinée à obturer.

Un troisième aspect de l'invention concerne un dispositif de positionnement par rapport à un référentiel fixe, d'un véhicule automobile, comprenant des moyens matériels et/ou logiciels de mise en oeuvre d'un procédé de positionnement tel que mentionné ci-dessus.

Un quatrième aspect de l'invention concerne enfin un système d'échange d'une batterie d'alimentation d'un moteur d'entraînement d'un véhicule automobile à traction électrique ou hybride, comprenant un dispositif de positionnement tel que mentionné ci-dessus. Le système d'échange peut comprendre des moyens matériels et/ou logiciels de mise en oeuvre d'un procédé d'échange évoqué ci-dessus.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue en perspective de dessus d'un exemple de dispositif de positionnement selon le troisième aspect de l'invention dans un exemple de système d'échange selon le quatrième aspect de l'invention,
- la figure 2 illustre en perspective de dessus un plateau avant du dispositif de la figure 1,
- la figure 3 illustre en perspective de dessus un plateau arrière du dispositif de la figure 1,
- la figure 4 est une vue éclatée du montage du dispositif de positionnement de la figure 1 dans une partie de système d'échange.

### Description de modes préférentiels de l'invention

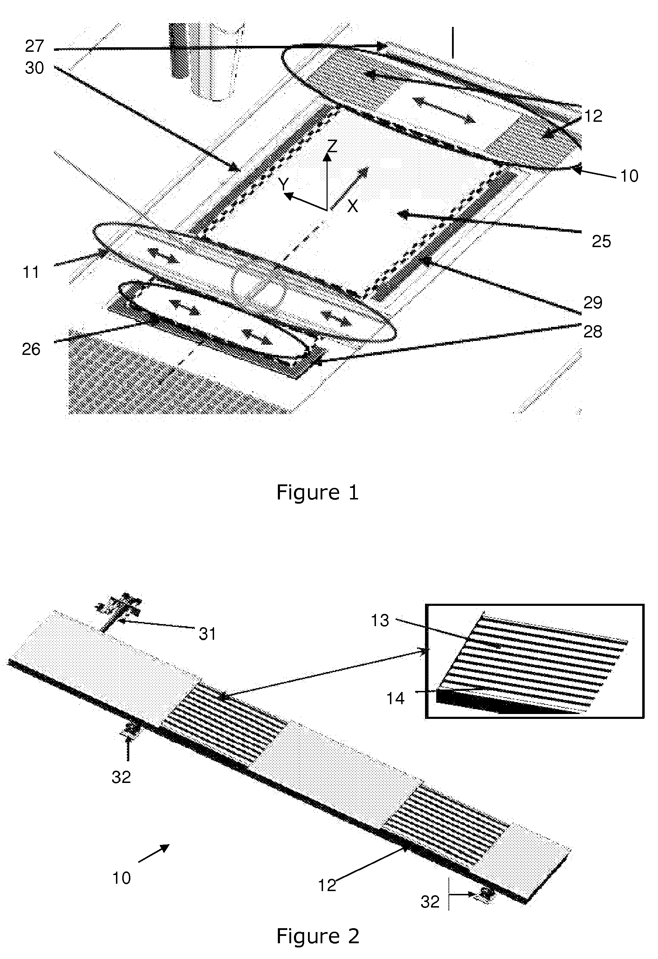

Le dispositif de positionnement représenté sur la figure 1 est destiné à assurer un positionnement par rapport à un référentiel fixe d'un véhicule automobile en l'absence d'action d'un moteur d'entraînement du véhicule automobile. À titre d'exemple non exclusif, le dispositif de positionnement est utilisé dans l'aménagement d'une station d'échange de batteries d'alimentation du moteur d'entraînement afin de positionner le véhicule par rapport au sol de la station pour les opérations de montage et de démontage de batterie sur le véhicule.

Le référentiel fixe comprend un axe longitudinal de référence X, un axe transversal de référence Y et un axe vertical de référence Z, tandis que le véhicule porte un référentiel mobile comprenant un axe longitudinal, un axe transversal et un axe vertical (non représentés).

Le concept de la solution de positionnement selon l'invention réside principalement dans l'accomplissement d'une première étape de centrage du véhicule selon l'axe Y d'une manière qui sera décrite plus loin. Puis une deuxième étape de positionnement du véhicule peut être réalisée par un positionnement du véhicule selon l'axe X et/ou autour de l'axe Z. Le véhicule est alors éventuellement immobilisé relativement aux référentiel fixe (X, Y, Z) après ou de manière combinée avec la deuxième étape. Enfin, le véhicule peut subir éventuellement une correction d'assiette par un positionnement de la caisse du véhicule par rapport au sol selon l'axe Z et/ou autour des axes longitudinal et/ou transversal associés au véhicule.

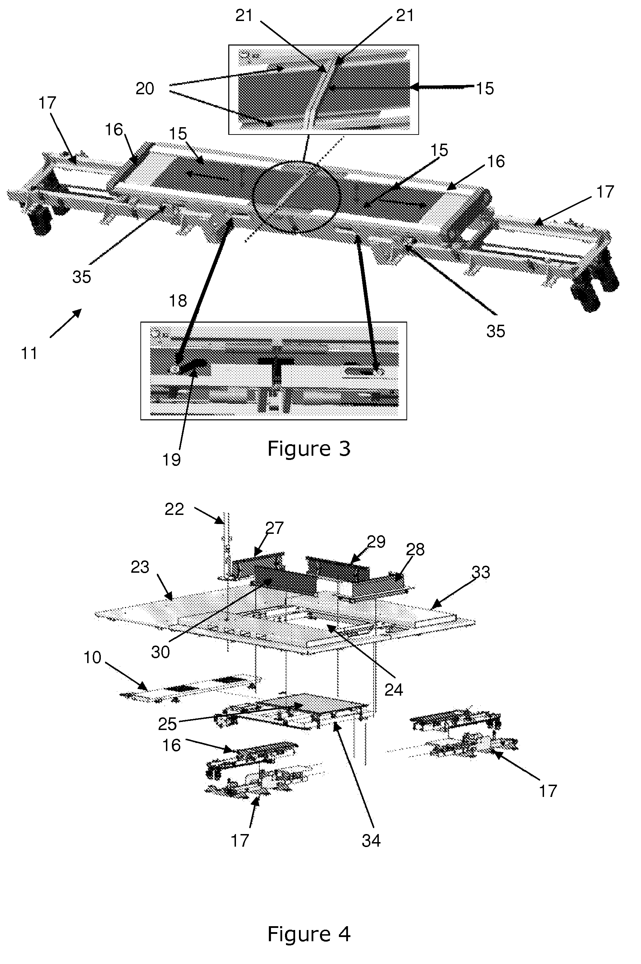

Principalement, le dispositif de positionnement comprend un plateau avant 10 et un plateau arrière 11 dédiés à ces opérations, respectivement illustrés en détail sur les figures 2 et 3. Le plateau avant 10 est destiné à supporter les roues de l'essieu avant du véhicule au cours de son positionnement, tandis que le plateau arrière 11 est destiné à supporter les roues de l'essieu arrière du véhicule au cours de son positionnement.

Le plateau avant 10 est monté mobile en translation dans un mouvement d'ensemble par rapport au référentiel fixe, notamment par rapport au sol, selon l'axe transversal de référence Y. Cette mobilité en translation suivant l'axe Y obtenue par des galets de coulissement 32 a pour fonction de conférer une mobilité libre suivant l'axe Y, du véhicule reposant sur le plateau avant 10 par les roues de son essieu avant, par rapport au référentiel fixe. Le véhicule peut alors se déplacer selon Y sous l'effet d'efforts transversaux de centrage appliqués au véhicule au niveau de l'essieu arrière comme expliqué ci-après.

En complément, le plateau avant 10 est équipé de deux zones d'appui 12 des roues avant, chacune des zones d'appui 12 étant équipée d'un dispositif adapté pour mettre en place ou inversement inhiber un glissement relatif d'une roue avant selon l'axe longitudinal de référence X, par rapport au sol qui est pour sa part fixe dans le référentiel fixe. Le glissement d'une roue avant selon l'axe X, correspondant concrètement à l'aménagement d'une mobilité locale de la roue avant par rapport au sol au point de contact de cette roue avec le sol, autorise ainsi une rotation libre de cette roue (par exemple en cas d'application d'un effort moteur sur cette roue) tout en maintenant le véhicule fixe, et/ou une translation de cette roue selon l'axe X en cas de déplacement d'ensemble en translation du véhicule selon l'axe X. Un tel dispositif peut ainsi comprendre une pluralité de rouleaux 13 parallèles montés fous sur le reste du plateau avant 10 en étant orientés selon l'axe Y et décalés les uns des autres selon l'axe X. Le dispositif peut en outre comprendre des éléments d'adhérence 14 de roues, par exemple sous la forme de peignes rétractables, destinés à varier par actionnement d'un vérin 31 entre une position effacée sous les rouleaux 13 autorisant le glissement relatif roue/sol par rotation des rouleaux 13 et une position en saillie par rapport aux rouleaux 13 selon l'axe Z interdisant le glissement relatif par adhérence entre les éléments 14 et la roue et autorisant ainsi la roue à transmettre un effort moteur par rapport au sol.

L'aménagement de la mobilité libre selon Y dans la première étape de centrage peut être obtenu à l'aide d'un plateau avant fixe par rapport au sol, dans le référentiel. Dans ce cas, les rouleaux 13 présentent une mobilité selon Y par rapport au reste du plateau avant.

Le plateau arrière 11 se compose quant à lui d'un ensemble de droite et d'un ensemble de gauche, identiques et disposés symétriquement par rapport à un plan de référence longitudinal-vertical (X, Z) fixe par rapport au référentiel fixe, ayant un vecteur normal colinéaire à l'axe de référence transversal Y. Chacun de ces ensembles comprend un élément de support 15 sur lequel l'une des roues de l'essieu arrière est destinée à venir en appui au moment de la mise en place du véhicule sur le dispositif de positionnement. Chacun de ces éléments de support 15 est monté à translation libre selon l'axe de référence Y par rapport à un coulisseau 16 associé, lui-même monté à translation par des galets 35 selon l'axe de référence Y par rapport à un châssis 17 logé sous le sol fixement relativement au référentiel fixe. Le châssis 17 comprend en outre des moyens pour actionner la translation selon l'axe Y du coulisseau 16 et/ou de l'élément de support 15. Les coulisseaux 16 peuvent varier entre une configuration fermée en contact l'un avec l'autre par leur extrémité transversale distale, et une configuration ouverte où les coulisseaux 16 sont à distance l'un de l'autre. Le montage de l'élément de support 15 sur le coulisseau 16 correspondant prévoit un degré de liberté de l'élément de support 15 selon l'axe Z par rapport au coulisseau 16, par exemple à l'aide d'un galet de levage 18 fixe par rapport au coulisseau 16 et coulissant le long d'une ouverture allongée 19 ménagée dans l'élément 15 et présentant sur sa longueur une déviation ayant une composante selon l'axe Z. L'ensemble est configuré de sorte que l'élément de support 15 peut varier de position selon Z, sous l'effet d'un coulissement relatif en Y par rapport au coulisseau 16, entre une position en saillie par rapport à des rouleaux fous 20 orientés selon l'axe Y et décalés selon l'axe X, et une position effacée sous les rouleaux fous 20. Ainsi quand les roues de l'essieu arrière reposent sur les éléments de support 15, les deux éléments de support 15 qui adoptent la position en saillie par rapport aux rouleaux fous 20 forment un ensemble solidaire du véhicule et monté à translation libre selon l'axe Y par rapport aux coulisseaux 16, et finalement par rapport au sol. Les deux éléments de support 15, sous l'effet de la gravité appliquée par le véhicule au niveau des roues de l'essieu arrière, se déplacent conjointement avec le véhicule selon l'axe Y lors du centrage du véhicule selon Y. Lorsque l'abaissement des éléments de support 15 est par contre opéré, les roues de l'essieu arrière s'abaissent en même temps jusqu'à venir reposer sur les rouleaux fous 20 et le contact entre les roues et les éléments de support 15 est supprimé. Le montage de l'élément 15 sur le coulisseau 16 correspondant peut prévoir soit un abaissement automatique de l'élément 15 au-delà d'une certaine ouverture des coulisseaux 16, soit un abaissement sélectif commandé spécifiquement. Les éléments de support 15 peuvent alors ensuite librement se translater selon Y par rapport au sol et par rapport au véhicule, tandis que ce sont les coulisseaux 16 équipés des rouleaux 20 qui deviennent solidaires du véhicule sous l'effet de gravité. Les éléments de support 15 peuvent être prévus pour s'écarter par la suite d'une manière suffisante transversalement pour donner accès à l'ensemble de l'essieu arrière par le dessous.

Les coulisseaux 16 sont destinés à permettre une application d'efforts mécaniques au véhicule afin de réaliser une étape de centrage du véhicule selon l'axe transversal Y par rapport au référentiel fixe. Plus précisément, le centrage consiste à déplacer transversalement le véhicule par rapport à un plan longitudinal-vertical de référence (X, Z) invariable dans le référentiel fixe tandis que le véhicule est globalement monté à translation selon Y en reposant sur le plateau avant 10 par ses roues avant et sur les éléments de support 15 par ses roues arrière, ce déplacement consistant à venir faire coïncider ou sensiblement coïncider le centre d'un premier essieu du véhicule avec le plan de référence quelles que soient les voies du véhicule.

Dans ce qui précède, la voie correspond à la distance ou l'écartement entre les deux roues d'un même essieu, qu'il soit avant ou arrière. De façon précise, la voie mesure la distance entre les centres des zones de contact des roues d'un même essieu avec le sol. Il est fréquent qu'un véhicule ait une voie avant et une voie arrière différentes. Selon le type de suspension, la voie peut varier avec la charge, la voie correspondant alors à la mesure de la distance à vide.

Dans l'exemple particulier qui est décrit ici, les coulisseaux 16 sont destinés à venir faire coïncider ou sensiblement coïncider le centre de l'essieu arrière avec le plan de référence (X, Z). Pour cela, l'application d'efforts de centrage sur le véhicule est réalisée sur deux éléments symétriques du véhicule relativement à un plan médian longitudinal-vertical associé à celui-ci, notamment deux roues d'un même essieu (par exemple les deux flancs internes des roues de l'essieu arrière), par deux éléments de centrage 21 portés par les coulisseaux 16 et contraints à se déplacer symétriquement l'un à l'autre relativement au plan (X, Z) de référence. Pour chaque ensemble du plateau arrière 11, l'élément de centrage 21 est aménagé par exemple à l'extrémité du coulisseau 16 en regard de l'autre ensemble. À titre d'exemple, les éléments de centrage 21 sont en contact l'un avec l'autre en configuration fermée des coulisseaux 16. Le passage en configuration ouverte des coulisseaux 16, par un coulissement de ces derniers selon l'axe de référence Y relativement aux châssis 17, provoque un déplacement symétrique des éléments de centrage 21 l'un à l'autre relativement au plan de référence, ce déplacement étant prolongé jusqu'à d'abord un contact de l'un de ces éléments 21 avec le flanc interne d'une roue arrière, puis jusqu'à une mise en contact de l'autre élément 21 avec le flanc interne de l'autre roue arrière. Au cours de ce déplacement des coulisseaux 16, les éléments de support 15 restent immobiles dans un premier temps tandis que les éléments 21 se déplacent le long des éléments 15 selon Y, par exemple au-dessus de ceux-ci. Entre les deux mises en contact, le mouvement du coulisseau 16 portant l'élément 21 déjà en contact assure un déplacement en translation transversale du véhicule afin d'en assurer ainsi son centrage transversal. Le déplacement du véhicule est interrompu lors de l'entrée en contact de l'autre élément de centrage 21 avec l'autre roue arrière, le véhicule étant alors centré transversalement de sorte que le centre de son essieu arrière coïncide avec le plan de référence. Des moyens de mesure et/ou de contrôle de la pression de contact entre les flancs de roues arrière et les éléments de centrage 21 peuvent être prévus pour commander l'interruption du déplacement en ouverture des coulisseaux 16 au-delà d'une valeur de pression prédéterminée. Dans le cas éventuel où les éléments de centrage sont prévus pour agir sur des éléments symétriques du véhicule décalés longitudinalement par rapport au premier essieu, un léger décalage de l'ordre de quelques millimètres pourra être envisagé entre le plan de référence et le centre du premier essieu.

À l'issue d'une telle première étape de centrage transversal du véhicule, il peut être prévu une deuxième étape de positionnement du véhicule afin d'en assurer son positionnement selon l'axe longitudinal de référence X par rapport au référentiel fixe et/ou compenser des défauts d'alignement entre l'axe longitudinal de référence X et l'axe longitudinal associé au véhicule. C'est pour cette raison qu'à la suite du centrage transversal du véhicule correspondant à la première étape, les éléments de support 15 sur lesquels les roues arrière reposent au cours de la première étape de centrage peuvent s'abaisser jusqu'à obtenir le placement de chacune des deux roues arrière dans l'espace longitudinal entre les rouleaux fous 20 correspondants tout en faisant porter la roue sur les deux rouleaux 20, cet espace et les rouleaux 20 des deux ensembles du plateau arrière 11 participant à l'aménagement d'un élément de positionnement longitudinal du véhicule. Ainsi, au cours de cette deuxième étape de positionnement résultant du placement des roues arrière sur les rouleaux fous 20, le positionnement du véhicule ainsi obtenu par rapport au référentiel fixe, comprend un positionnement du véhicule par rapport au référentiel fixe selon l'axe longitudinal de référence X (les rouleaux 20 étant fixes dans le référentiel fixe selon l'axe X), et/ou autour de l'axe vertical de référence Z de sorte à faire coïncider un plan médian longitudinal-vertical du véhicule avec le plan longitudinal-vertical de référence (X, Z). C'est pour permettre de positionner ainsi le véhicule dans le cas où les roues arrière sont bloquées (par appui sur la pédale de frein ou par enclenchement du frein de parking) que les rouleaux 20 avec lesquels coopèrent les roues arrière sont montés de manière folle relativement aux coulisseaux 16. De la même manière, c'est pour rendre le véhicule mobile suivant l'axe longitudinal de référence X pendant la deuxième étape de positionnement malgré un bocage des roues avant (par exemple par appui sur la pédale de frein ou potentiellement par enclenchement du frein de parking) qu'un glissement relatif libre des roues avant par rapport au sol a été mis en place selon l'axe longitudinal de référence X.

L'emplacement et les dimensions des zones d'appui 12 et des éléments de support 15 suivant les axes de référence X et Y peuvent être choisis de sorte à pouvoir assurer le positionnement de tout type de véhicules attendus, notamment indépendamment des empattements et des voies correspondantes de ces véhicules, i.e. les voies avant ou arrière en fonction du plateau considéré.

Il peut être prévu une immobilisation par rapport au référentiel fixe, d'un véhicule ayant subi le positionnement correspondant aux deux étapes précédemment décrites, i.e. la première étape de centrage transversal du véhicule et la deuxième étape de positionnement. Dans l'exemple décrit ici, cette étape d'immobilisation est combinée à la deuxième étape de positionnement, mais cela pourrait indifféremment consister en une étape séparée et ultérieure. En effet, à l'issue de la deuxième étape de positionnement, les roues arrières sont longitudinalement bloquées par les rouleaux 20 tandis que les roues avant reposent sur les zones d'appui 12 avec aménagement d'un glissement relatif roues avant/zones d'appui 12 selon l'axe longitudinal de référence X, de sorte qu'aucune transmission de puissance des roues avant au sol n'est possible. Le véhicule se trouve ainsi immobilisé suivant l'axe longitudinal de référence X, tandis qu'au moins l'adhérence des roues arrière sur les rouleaux fous 20 sous l'effet de gravité assure l'immobilisation du véhicule selon l'axe transversal de référence Y par rapport au référentiel fixe. Le maintien en appui des éléments de centrage 21 contre les roues arrière peut également participer à l'immobilisation transversale du véhicule. Pour inhiber l'immobilisation du véhicule suivant l'axe longitudinal de référence X, il suffit ensuite de placer les éléments d'adhérence 14 dans la position en saillie par rapport aux rouleaux 13 selon l'axe Z de sorte à interdire le glissement relatif des roues avant et autoriser ainsi la roue à transmettre un effort moteur par rapport au sol.

En outre, il peut être prévu l'aménagement d'éléments de correction d'assiette du véhicule par rapport au sol fixe dans le référentiel fixe. Ces éléments 22 sont visibles sur la figure 4, et peuvent être constitués par tout moyen idoine, par exemple une pluralité (par exemple quatre) de crics montés sur le sol avec une mobilité en X et en Y et assurant une fonction de levage en Z. Suivant la conception de la batterie et de la teneur des opérations d'échange, il est possible de ne prévoir que deux de ces éléments par exemple à proximité des roues avant droite et gauche. Ces éléments, de manière générale, sont destinés à créer un soulèvement local ou global de la caisse du véhicule afin de réaliser un positionnement de la caisse du véhicule par rapport au sol selon l'axe vertical de référence, et/ou autour de l'axe longitudinal associé au véhicule, et/ou autour de l'axe transversal associé au véhicule. Autrement dit, le véhicule est amené dans une assiette déterminée par ce positionnement.

Dans la solution de positionnement (dispositif et procédé) précédemment décrite, les rôles des essieux avant et arrière peuvent être indifféremment inversés sans sortir du cadre de l'invention, par une inversion des plateaux avant et arrière.

Le dispositif de positionnement par rapport à un référentiel fixe, d'un véhicule automobile, comprend ainsi des moyens matériels 10, 11, 12, 13, 14, 15, 16, 17, 18, 19, 20, 21 et/ou logiciels de mise en oeuvre d'un procédé de positionnement tel que décrit ci-dessus. Notamment, le dispositif comprend un moyen de centrage transversal 10, 11, 12, 16, 21 du véhicule par rapport à un plan longitudinal-vertical de référence invariable dans le référentiel fixe pour faire coïncider ou sensiblement coïncider le centre d'un premier essieu du véhicule avec le plan de référence quelle que soit la voie du premier essieu du véhicule. Il peut comprendre en outre un moyen d'aménagement d'une mobilité libre 10, 11 du véhicule par rapport au référentiel fixe selon l'axe transversal de référence et/ou un moyen d'application d'efforts 16, 21 sur le véhicule configurés de sorte à déplacer le véhicule transversalement et/ou un élément de positionnement longitudinal 20 dans lequel sont placées les deux roues du premier essieu du véhicule par des moyens d'abaissement 18, 19 d'un élément de support 15 et/ou un moyen d'immobilisation du véhicule par rapport au référentiel fixe et/ou un moyen 13, 14 de mise en place d'un glissement relatif libre selon l'axe longitudinal de référence, par rapport au sol qui est fixe dans le référentiel fixe, des roues qui ne coopèrent pas avec l'élément de positionnement longitudinal et/ou un moyen de correction d'assiette du véhicule par rapport au sol fixe dans le référentiel fixe.

Le positionnement du véhicule obtenu par l'ensemble des opérations décrites ci-dessus permet par exemple de localiser le véhicule par rapport au sol et par rapport à un système d'échange de batterie selon une précision nettement supérieure à la précision du positionnement avant l'utilisation du dispositif de positionnement, à l'issue par exemple du pré-positionnement du véhicule par le conducteur. La précision du positionnement obtenu est par exemple de l'ordre de plus ou moins 1 mm, ce qui n'est pas réalisable de manière répétée par un simple pré-positionnement par le conducteur.

La solution de positionnement d'un véhicule par rapport à un référentiel fixe qui est décrite ci-dessus peut trouver des nombreuses applications, comme par exemple lorsqu'il est nécessaire de réaliser un échange d'une batterie d'alimentation d'un moteur d'entraînement sur le véhicule dans le cas où il présente une chaîne de traction toute électrique ou hybride. Cet échange nécessite en effet un montage et un démontage de la batterie au sein d'un système ou station d'échange de batteries, et ces opérations réclament un positionnement du véhicule auquel elles sont appliquées par rapport à un référentiel fixe associé au système d'échange qui comporte classiquement une plate-forme ou trottoir 23 visible sur la figure 4. Ainsi, le dispositif de positionnement d'un véhicule par rapport à un référentiel fixe qui comprend les moyens matériels et/ou logiciels de mise en oeuvre de toute ou partie des étapes de positionnement décrites ci-dessus, peut être utilisé pour l'aménagement d'une station ou système d'échange de batterie en étant disposé au niveau ou en dessous de la plate-forme 23. En particulier, les plateaux avant et arrière 10, 11 peuvent être agencés en travers d'une ouverture 24 ménagée dans la plate-forme 23, de sorte que le véhicule puisse venir déposer ses roues sur les plateaux 10, 11 en passant au-dessus de l'ouverture 24 qui peut être obturée par une ou plusieurs portes coulissantes 33 horizontalement. La solution de positionnement décrite préalablement a alors pour fonction de positionner le véhicule qui doit subir l'échange de batterie par rapport à un système d'échange de batterie comprenant d'une part la plate-forme 23 et d'autre part un dispositif de montage et de démontage (non représenté) de batterie disposé en dessous de la plate-forme 23, par exemple dans une fosse ménagée sous le véhicule. Plus précisément, le dispositif de montage et de démontage de batterie présente un accès à la batterie du véhicule par le dessous, en passant à travers un trou 34 aménagé au droit de l'ouverture 24 de la plate-forme 23, entre les plateaux avant et arrière 10, 11 et/ou en arrière du plateau arrière 11 suivant l'axe X, en fonction de l'emplacement de la batterie à bord du véhicule. Ainsi, le système d'échange de batterie peut comporter l'aménagement d'une trappe centrale 25 entre les deux plateaux avant et arrière 10, 11 et/ou d'une trappe arrière 26 à l'arrière du plateau arrière 11. Ces trappes 25, 26 sont amovibles par tout moyen adapté de sorte à autoriser le montage et le démontage de batterie en travers du trou 34 que la trappe correspondante est destinée à obturer. La trappe centrale 25 permet l'accès à une batterie montée sur le véhicule entre les essieux avant et arrière, tandis que la trappe arrière 26 permet l'accès à une batterie logeable au niveau du coffre du véhicule.

Pour permettre de placer le véhicule sur le dispositif de positionnement logé sous la plate-forme 23 afin de réaliser le positionnement précis par rapport au dispositif de montage/démontage de batterie, le système d'échange de batterie peut comporter des moyens configurés pour assurer un pré-positionnement du véhicule par le conducteur lui-même par rapport au système d'échange, notamment la plate-forme 23. Ce pré-positionnement peut comprendre un guidage actif du conducteur au niveau d'une interface conducteur/système d'échange. Cette interface d'aide au pré-positionnement peut être un écran permettant de donner des instructions visuelles au conducteur pour lui indiquer en temps réel les opérations de conduites qu'il doit accomplir pour pré-positionner de manière attendue le véhicule par rapport à la plate-forme 23. Cette interface peut en complément ou en substitution mettre en oeuvre la transmission d'instructions sonores à destination du conducteur. Pour réaliser un tel guidage actif, une détermination de la position réelle, en temps réel, du véhicule en cours de pré-positionnement par rapport à un référentiel fixe associé au système d'échange de batterie, peut être prévue au moins selon l'axe longitudinal de référence X et l'axe transversal de référence Y. Cette détermination peut être accomplie à l'aide de capteurs optiques, lasers ou autres, de position agencés transversalement et longitudinalement pour respectivement déterminer la position réelle du véhicule selon l'axe Y et selon l'axe X.

Préalablement à un tel pré-positionnement, il est envisageable de prévoir une reconnaissance de véhicule à distance, par exemple grâce à une solution incluant une puce RFID, afin de pouvoir prévoir un choix éventuel de dispositif de montage/démontage et/ou de type de batterie dans la zone de stockage et/ou de recharge électrique, en fonction du type de véhicule.

Une opération de lavage et éventuellement de séchage du véhicule, en particulier de la batterie qu'il porte, peut éventuellement être prévue après la reconnaissance de véhicule et avant l'installation du véhicule sur le dispositif de positionnement.

Dans une variante présentant une sécurité renforcée, il est possible de prévoir que la position effacée des éléments d'adhérence 14 sous les rouleaux 13 autorisant le glissement relatif roue/sol soit commandée lors de l'ouverture de la trappe 25 et/ou 26 ménagée sous le véhicule au droit de la batterie pour en permettre le démontage et le démontage relativement au véhicule. Ainsi toute transmission de puissance au sol des roues motrices est inhibée tant que la trappe 25 et/ou 26 n'est pas refermée, limitant les risques pour des objets ou des personnes de tomber à travers les trous 34 que les trappes 25/26 obturent. Pour encore plus limiter ces risques, il est possible de prévoir (voir figure 4) un aménagement amovible d'éléments de remplissage entre la caisse du véhicule et le sol en périphérie du trou 34 que la (les) trappe(s) est (sont) destinée(s) à obturer. Ces éléments peuvent être constitués par des jupes avant et arrière 27, 28 disposées transversalement et décalées longitudinalement et des jupes latérales 29, 30 disposées longitudinalement et décalées transversalement. Les jupes 27 à 30 sont rétractables sous le niveau supérieur de la plate-forme 23 et viennent jusqu'à proximité de la caisse du véhicule en périphérie de la batterie lorsqu'elles sont levées en saillie de la plate-forme.

Enfin, le système d'échange de batterie pourra inclure tous les moyens matériels et/ou logiciels de mise en oeuvre de toute ou partie des étapes décrites ci-dessus pour parvenir à l'échange de batterie.

La solution technique est fonctionnante quelles que soient les utilisations du conducteur :
- rotation du volant (roues avant),
- appui sur le frein à pied,
- appui sur l'accélérateur (le véhicule étant immobile grâce aux rouleaux),
- frein à main actionné ou véhicule à frein automatique,
- véhicule avec une transmission automatique, quelle que soit la position du levier de vitesse (park, drive, neutre, ou reverse).

## Revendications

1. Procédé de positionnement par rapport à un référentiel fixe comprenant un axe longitudinal de référence (X), un axe transversal de référence (Y) et un axe vertical de référence (Z), d'un véhicule automobile comprenant un axe longitudinal, un axe transversal et un axe vertical, en l'absence d'action d'un moteur d'entraînement du véhicule automobile, comprenant une première étape de centrage transversal du véhicule par rapport à un plan longitudinal-vertical de référence (X, Z) invariable dans le référentiel fixe jusqu'à faire coïncider ou sensiblement coïncider le centre d'un premier essieu du véhicule avec le plan de référence (X, Z) quelle que soit la voie du premier essieu du véhicule, le procédé comportant une deuxième étape de positionnement du véhicule par rapport au référentiel fixe comprenant :
- un positionnement du véhicule par rapport au référentiel fixe selon l'axe longitudinal de référence (X), et/ou
- un positionnement du véhicule par rapport au référentiel fixe autour de l'axe vertical de référence (Z) de sorte à faire coïncider un plan médian longitudinal-vertical du véhicule avec le plan longitudinal-vertical de référence (X, Z),
le procédé étant **caractérisé en ce que**
ladite deuxième étape de positionnement comprend en outre le placement des deux roues du premier essieu du véhicule dans un élément de positionnement longitudinal (20), par abaissement d'un élément de support (15) sur lesquels ces roues reposent au cours de la première étape de centrage.

2. Procédé de positionnement selon la revendication 1, **caractérisé en ce que** la première étape de centrage comprend un aménagement d'une mobilité libre du véhicule par rapport au référentiel fixe selon l'axe transversal de référence.

3. Procédé de positionnement selon la revendication 2, **caractérisé en ce que** la première étape de centrage comprend une application d'efforts sur le véhicule configurés de sorte à déplacer le véhicule transversalement.

4. Procédé de positionnement selon la revendication 3, **caractérisé en ce que** l'application d'efforts est réalisée sur deux éléments du véhicule symétriques relativement à un plan médian longitudinal-vertical associé au véhicule par deux éléments de centrage (21) contraints à se déplacer symétriquement l'un à l'autre relativement au plan de référence (X, Z).

5. Procédé de positionnement selon la revendication 4, **caractérisé en ce que** les éléments de véhicule symétriques sont deux roues du premier essieu.

6. Procédé de positionnement selon la revendication 1, **caractérisé en ce qu'**il comprend une étape d'immobilisation du véhicule par rapport au référentiel fixe.

7. Procédé de positionnement selon la revendication 6, **caractérisé en ce que** l'étape d'immobilisation est combinée à la deuxième étape de positionnement.

8. Procédé de positionnement selon la revendication 7, **caractérisé en ce que** la deuxième étape de positionnement et l'étape d'immobilisation comprennent la mise en place d'un glissement relatif selon l'axe longitudinal de référence, par rapport au sol qui est fixe dans le référentiel fixe, des roues qui ne coopèrent pas avec l'élément de positionnement longitudinal.

9. Procédé de positionnement selon l'une des revendications 1 à 8, **caractérisé en ce qu'**il comprend une étape de correction d'assiette du véhicule par rapport au sol fixe dans le référentiel fixe, comprenant :
- un positionnement de la caisse du véhicule par rapport au sol selon l'axe vertical de référence (Z), et/ou
- un positionnement de la caisse du véhicule par rapport au sol autour de son axe longitudinal, et/ou
- un positionnement de la caisse du véhicule par rapport au sol autour de son axe transversal.

10. Procédé d'échange d'une batterie d'alimentation d'un moteur d'entraînement d'un véhicule automobile à traction électrique ou hybride, **caractérisé en ce qu'**il comprend une étape de positionnement du véhicule par rapport à un système d'échange de batterie, ce positionnement étant réalisé en mettant en oeuvre un procédé de positionnement selon l'une des revendications 1 à 9.

11. Procédé d'échange selon la revendication 10, **caractérisé en ce qu'**il comprend une étape de pré-positionnement du véhicule par le conducteur par rapport au système d'échange, préalablement à l'étape de positionnement, et comprenant un guidage actif du conducteur grâce à une interface conducteur/système d'échange.

12. Procédé d'échange selon la revendication 10, **caractérisé en ce que** l'étape de pré-positionnement comprend une détermination de la position réelle du véhicule par rapport au référentiel fixe, au moins selon les axes transversal de référence et longitudinal de référence.

13. Procédé d'échange selon l'une des revendications 10 à 12, mettant en oeuvre un procédé de positionnement selon la revendication 7, **caractérisé en ce que** la mise en place du glissement relatif des roues selon l'axe longitudinal de référence par rapport au sol est commandée lors de l'ouverture d'une trappe ménagée sous le véhicule au droit de la batterie pour en permettre le montage et le démontage relativement au véhicule.

14. Procédé d'échange selon la revendication 13, **caractérisé en ce qu'**il comprend un aménagement amovible d'éléments de remplissage entre la caisse du véhicule et le sol en périphérie du trou que la trappe est destinée à obturer.

15. Dispositif de positionnement par rapport à un référentiel fixe, d'un véhicule automobile, **caractérisé en ce qu'**il comprend des moyens matériels (10, 11, 12, 13, 14, 15, 16, 17, 18, 19, 20, 21) et/ou logiciels de mise en oeuvre d'un procédé de positionnement selon l'une des revendications 1 à 9.

16. Système d'échange d'une batterie d'alimentation d'un moteur d'entraînement d'un véhicule automobile à traction électrique ou hybride, comprenant un dispositif de positionnement selon la revendication 15.

17. Système d'échange selon la revendication 16, **caractérisé en ce qu'**il comprend des moyens matériels et/ou logiciels de mise en oeuvre d'un procédé d'échange selon l'une des revendications 10 à 14.

## Patentansprüche

1. Verfahren zur Positionierung eines Kraftfahrzeugs, das eine Längsachse, eine Querachse und eine vertikale Achse umfasst, bezüglich eines festen Bezugssystems, das eine Bezugslängsachse (X), eine Bezugsquerachse (Y) und eine vertikale Bezugsachse (Z) umfasst, ohne Betrieb eines Antriebsmotors des Kraftfahrzeugs, umfassend einen ersten Schritt der Querzentrierung des Fahrzeugs bezüglich einer im festen Bezugssystem unveränderlichen Vertikal-Längsbezugsebene (X, Z) bis die Mitte einer ersten Achse des Fahrzeugs, unabhängig von der Spurweite der ersten Achse des Fahrzeugs, mit der Bezugsebene (X, Z) zusammenfällt oder im Wesentlichen zusammenfällt, wobei das Verfahren einen zweiten Schritt der Positionierung des Fahrzeugs bezüglich des festen Bezugssystems aufweist, der Folgendes umfasst:
- eine Positionierung des Fahrzeugs bezüglich des festen Bezugssystems entlang einer Bezugslängsachse (X) und/oder
- eine Positionierung des Fahrzeugs bezüglich des festen Bezugssystems um die vertikale Bezugsachse (Z), so dass eine Vertikal-Längsmittelebene des Fahrzeugs mit der Vertikal-Längsbezugsebene (X, Z) zusammenfällt,
**dadurch gekennzeichnet, dass** der zweite Positionierungsschritt ferner die Platzierung der beiden Räder der ersten Achse des Fahrzeugs durch Absenken eines Stützelements (15), auf dem diese Räder während des ersten Zentrierungsschritts ruhen, in ein Längspositionierungselement (20) umfasst.

2. Positionierungsverfahren nach Anspruch 1, **dadurch gekennzeichnet, dass** der erste Zentrierungsschritt eine Führung einer freien Beweglichkeit des Fahrzeugs bezüglich des festen Bezugssystems entlang der Bezugsquerachse umfasst.

3. Positionierungsverfahren nach Anspruch 2, **dadurch gekennzeichnet, dass** der erste Zentrierungsschritt ein Ausüben von Kräften auf das Fahrzeug umfasst, die zum Querverschieben des Fahrzeugs konfiguriert sind.

4. Positionierungsverfahren nach Anspruch 3, **dadurch gekennzeichnet, dass** das Ausüben von Kräften an zwei Elementen des Fahrzeugs erfolgt, die zu einer dem Fahrzeug zugeordneten Vertikal-Längsmittelebene symmetrisch sind, und zwar durch zwei Zentrierungselemente (21), die dazu gezwungen sind, sich bezüglich der Bezugsebene (X, Z) zueinander symmetrisch zu verschieben.

5. Positionierungsverfahren nach Anspruch 4, **dadurch gekennzeichnet, dass** die symmetrischen Fahrzeugelemente zwei Räder der ersten Achse sind.

6. Positionierungsverfahren nach Anspruch 1, **dadurch gekennzeichnet, dass** es einen Schritt der Immobilisierung des Fahrzeugs bezüglich des festen Bezugssystems umfasst.

7. Positionierungsverfahren nach Anspruch 6, **dadurch gekennzeichnet, dass** der Immobilisierungsschritt mit dem zweiten Positionierungsschritt kombiniert wird.

8. Positionierungsverfahren nach Anspruch 7, **dadurch gekennzeichnet, dass** der zweite Positionierungsschritt und der Immobilisierungsschritt die Bereitstellung eines Gleitens der Räder, die nicht mit dem Längspositionierungselement zusammenwirken, entlang der Bezugslängsachse bezüglich des Bodens, der im festen Bezugssystem fest ist, umfassen.

9. Positionierungsverfahren nach einem der Ansprüche 1 bis 8, **dadurch gekennzeichnet, dass** es einen Schritt zur Trimmkorrektur des Fahrzeugs bezüglich des Bodens, der im festen Bezugssystem fest ist, umfasst, umfassend:
- eine Positionierung des Karosseriekörpers des Fahrzeugs bezüglich des Bodens entlang der vertikalen Bezugsachse (Z) und/oder
- eine Positionierung des Karosseriekörpers des Fahrzeugs bezüglich des Bodens um seine Längsachse und/oder
- eine Positionierung des Karosseriekörpers des Fahrzeugs bezüglich des Bodens um seine Querachse.

10. Verfahren zum Wechseln einer Batterie zur Speisung eines Antriebsmotors eines Kraftfahrzeugs mit Elektro- oder Hybridantrieb, **dadurch gekennzeichnet, dass** es einen Schritt der Positionierung des Fahrzeugs bezüglich eines Batteriewechselsystems umfasst, wobei diese Positionierung durch Einsatz eines Positionierungsverfahrens nach einem der Ansprüche 1 bis 9 erfolgt.

11. Wechselverfahren nach Anspruch 10, **dadurch gekennzeichnet, dass** es vor dem Positionierungsschritt einen Schritt der Vorpositionierung des Fahrzeugs durch den Fahrer bezüglich des Wechselsystems umfasst, der eine aktive Führung des Fahrers dank einer Schnittstelle zwischen Fahrer und Wechselsystem umfasst.

12. Wechselverfahren nach Anspruch 10, **dadurch gekennzeichnet, dass** der Vorpositionierungsschritt eine Bestimmung der Ist-Position des Fahrzeugs bezüglich des festen Bezugssystems mindestens entlang der Querbezugs- und der Längsbezugsachse umfasst.

13. Wechselverfahren nach einem der Ansprüche 10 bis 12, unter Einsatz eines Positionierungsverfahrens nach Anspruch 7, **dadurch gekennzeichnet, dass** die Bereitstellung des relativen Gleitens der Räder entlang der Längsbezugsachse bezüglich des Bodens beim Öffnen einer unter dem Fahrzeug im rechten Winkel zu der Batterie vorgesehenen Klappe angewiesen wird, um die Montage und die Demontage bezüglich des Fahrzeugs zu gestatten.

14. Wechselverfahren nach Anspruch 13, **dadurch gekennzeichnet, dass** es eine entfernbare Anordnung von Füllelementen zwischen dem Karosseriekörper des Fahrzeugs und dem Boden am Rand des Lochs, das die Klappe verschließen soll, umfasst.

15. Vorrichtung zum Positionieren eines Kraftfahrzeugs bezüglich eines festen Bezugssystems, **dadurch gekennzeichnet, dass** sie Hardware- (10, 11, 12, 13, 14, 15, 16, 17, 18, 19, 20, 21) und/oder Software-Mittel zum Einsatz eines Positionierungsverfahrens nach einem der Ansprüche 1 bis 9 umfasst.

16. System zum Wechseln einer Batterie zur Speisung eines Antriebsmotors eines Kraftfahrzeugs mit Elektro- oder Hybridantrieb umfassend eine Positionierungsvorrichtung nach Anspruch 15.

17. Wechselsystem nach Anspruch 16, dadurch gekennzeichnen. dans es Hardware- und/oder Software-Mittel zum Einsatz eines Wechselverfahrens nach einem der Ansprüche 10 bis 14 umfasst.

## Claims

1. Method for positioning a motor vehicle comprising a longitudinal axis, a transverse axis and a vertical axis with respect to a fixed frame of reference comprising a reference longitudinal axis (X), a reference transverse axis (Y) and a reference vertical axis (Z) in the absence of action of a motor or engine that drives the motor vehicle, the method comprising a first step of transversely centering the vehicle with respect to a reference longitudinal-vertical plane (X, Z) that is invariable in the fixed frame of reference until the center of a first axle of the vehicle coincides or substantially coincides with the reference plane (X, Z), whatever the track width of the first axle of the vehicle, the method comprising a second step of positioning the vehicle with respect to the fixed frame of reference, comprising:
- a positioning of the vehicle with respect to the fixed frame of reference along the reference longitudinal axis (X), and/or
- a positioning of the vehicle with respect to the fixed frame of reference about the reference vertical axis (Z) so as to make a median longitudinal-vertical plane of the vehicle coincide with the reference longitudinal-vertical plane (X, Z),
the method being **characterized in that** the second positioning step further comprises the placing of the two wheels of the first axle of the vehicle in a longitudinal positioning element (20) by lowering a support element (15) on which these wheels rest during the first centering step.

2. Positioning method according to Claim 1, **characterized in that** the first centering step comprises a provision of a free movability of the vehicle with respect to the fixed frame of reference along the reference transverse axis.

3. Positioning method according to Claim 2, **characterized in that** the first centering step comprises an application of forces to the vehicle so as to displace the vehicle transversely.

4. Positioning method according to Claim 3, **characterized in that** the forces are applied over two elements of the vehicle that are symmetrical relative to a median longitudinal-vertical plane associated with the vehicle by two centering elements (21) forced to be displaced symmetrically to one another relative to the reference plane (X, Z).

5. Positioning method according to Claim 4, **characterized in that** the symmetrical vehicle elements are two wheels of the first axle.

6. Positioning method according to Claim 1, **characterized in that** it comprises a step of immobilizing the vehicle with respect to the fixed frame of reference.

7. Positioning method according to Claim 6, **characterized in that** the immobilizing step is combined with the second positioning step.

8. Positioning method according to Claim 7, **characterized in that** the second positioning step and the immobilizing step comprise the establishment of a relative sliding of the wheels not cooperating with the longitudinal positioning element along the reference longitudinal axis with respect to the floor, which is fixed in the fixed frame of reference.

9. Positioning method according to one of Claims 1 to 8, **characterized in that** it comprises a step of leveling the vehicle with respect to the floor fixed in the fixed frame of reference, comprising:
- a positioning of the vehicle body with respect to the floor along the reference vertical axis (Z), and/or
- a positioning of the vehicle body with respect to the floor about its longitudinal axis, and/or
- a positioning of the vehicle body with respect to the floor about its transverse axis.

10. Method for exchanging a battery that supplies power to a motor that drives an electric or hybrid motor vehicle, **characterized in that** it comprises a step of positioning the vehicle with respect to a battery exchange system, this positioning being achieved by implementing a positioning method according to one of Claims 1 to 9.

11. Exchange method according to Claim 10, **characterized in that** it comprises a step of pre-positioning of the vehicle by the driver with respect to the exchange system prior to the positioning step, comprising active guidance on the part of the driver thanks to a driver/exchange system interface.

12. Exchange method according to Claim 10, **characterized in that** the pre-positioning step comprises a determination of the actual position of the vehicle with respect to the fixed frame of reference, at least along the reference transverse and longitudinal axes.

13. Exchange method according to one of Claims 10 to 12, implementing a positioning method according to Claim 7, **characterized in that** the establishment of the relative sliding of the wheels along the reference longitudinal axis with respect to the floor is controlled during the opening of a hatch arranged beneath the vehicle to the right of the battery so as to enable said battery to be assembled and disassembled relative to the vehicle.

14. Exchange method according to Claim 13, **characterized in that** it comprises a removable arrangement of refueling elements between the vehicle body and the floor surrounding the hole that the hatch is intended to close.

15. Device for positioning a motor vehicle with respect to a fixed frame of reference, **characterized in that** it comprises hardware means (10, 11, 12, 13, 14, 15, 16, 17, 18, 19, 20, 21) and/or software means for implementing a positioning method according to one of Claims 1 to 9.

16. System for exchanging a battery that supplies power to a motor that drives an electric or hybrid motor vehicle, comprising a positioning device according to Claim 15.

17. Exchange system according to Claim 16, **characterized in that** it comprises hardware and/or software means for implementing an exchange method according to one of Claims 10 to 14.
